# EUROPEAN PATENT SPECIFICATION

(11) **EP 1 698 075 B1**
(45) Date of publication and mention of the grant of the patent: **02.01.2008**
(21) Application number: 04820616.3
(22) Date of filing: 18.11.2004
(51) Int. Cl.: H04B 7/212

(54) **A METHOD OF COMMUNICATION IN A TIME DIVISION DUPLEX (TDD) SATELLITE COMMUNICATION SYSTEM**
KOMMUNIKATIONSVERFAHREN IN EINEM SATELLITENKOMMUNIKATIONSSYSTEM MIT ZEITDUPLEX (TDD)
PROCEDE DE COMMUNICATION DANS UN SYSTEME DE COMMUNICATION PAR SATELLITE A DUPLEXAGE PAR REPARTITION DANS LE TEMPS (TDD)

(30) Priority: 23.12.2003 GB 0329783; 27.02.2004 GB 0404273
(43) Date of publication of application: 06.09.2006
(73) Proprietor: ROKE MANOR RESEARCH LIMITED, Romsey, Hampshire SO51 0ZN (GB)
(72) Inventor: HULBERT, Anthony, Peter, Southampton, Hampshire SO16 3DF (GB); TOMKINSON, Keith, David, Romsey, Hampshire SO51 0PD (GB)
(74) Representative: Payne, Janice Julia
(86) International application number: PCT/GB2004/004854
(87) International publication number: WO 2005/062501

(56) References cited:
- WO-A-00/27053
- GB-A- 2 339 366
- US-B1- 6 249 677
- US-B1- 6 298 048

## Description

This invention relates to a method of communication in a time division duplex (TDD) satellite communication system.

Time Division Duplex simplifies the hardware of satellites by eliminating the complex, heavy and costly diplexer filters required to facilitate the use of frequency division duplex (FDD). This, in turn, allows more complex RF structures to be implemented, including the use of larger numbers of elements in phased array antenna structures.

However, traditionally, the use of TDD has been associated with short to medium range terrestrial links where the propagation delays can be kept small in comparison with the length of the frames for TDD operation. This has been a requirement because conventional wisdom was that the TDD frames needed to incorporate guard periods equal to the maximum round trip propagation delay in order to avoid interference between uplink and downlink under worst case conditions.
The above constraint would clearly be prohibitive in a satellite application given a minimum round trip delay of order 240 ms. Thus, it is necessary to provide improvements for TDD in a satellite context to allow operation with high efficiency (minimal guard time) and a low marginal delay (short TDD frame).

US 6298048 describes a method for timing correction in a frequency division duplex communications receiver which transmits and receives at different frequencies, addressing the problem of using individual TDMA timers for each satellite with which the transceiver communicates.

US 6249677 describes an FDD satellite communication network where the user can provide additional information to speed up call set up times.

WO 00/20753 describes a method of TDMA communication in a satellite phone system which aims to provide full rate communication channels by interleaving different slots of different channels.

GB 2339366 describes a TDD radio communication system using adaptive rate matching dependent upon propagation delay.

In accordance with the present invention, a method of communication in a satellite communication system comprising at least one satellite and a plurality of terrestrial terminals comprises allocating time division multiple access (TDMA) time slots for transmission between the satellite and any one of the plurality of terminals, such that for any given terminal, transmit time slots for transmission to the satellite and receive time slots for reception from the satellite are separated in time; and wherein propagation delay is not an exact number of multiples of frame length; characterised in that the system is a time division duplex (TDD) satellite communication system; in that an assigned time delay between transmit and receive time slots at the any one terminal is small compared with round trip propagation delay; and in that, when the transmit time slot for one terminal, causes a transmission from that one terminal to be received at another terminal which transmission is overlapped in time with a receive time slot allocated for the other terminal, then those two terminals are spaced apart in distance, such that interference between the two terminals is negligible.

Preferably, signals between the terminals and the satellite are synchronised at the satellite.

Preferably, alternate time slots at the satellite are used for transmission and reception.

Preferably, the terminals use navigational information to estimate their propagation delay to the satellite; and thus to determine the time required to transmit into an allocated time slot.

Preferably, the satellite transmits ephemeris data to the terminals to aid in determining the propagation delay.

Preferably, the position of each terminal is determined by the satellite, using location data provided by each terminal.

Preferably, downlink timeslots are allocated to terminals at random.

Preferably, uplink timeslots are allocated in order to avoid a transmission at one terminal being received by another terminal at a time for which the other terminal has been allocated a receive time slot.

Preferably, terminal receive time slots are allocated randomly; wherein allocation of terminal transmit time slots includes the steps of: calculating the minimum distance between a transmitting terminal and a receiving terminal which receives the transmission; repeating this calculation for all terminal transmit time slots; repeating the calculation for all terminals; calculating the resulting interference if each terminal used its worst terminal transmit time slot; ranking the terminals according to which cause the worst interference with another terminal; and starting from the worst terminal, allocating the best time slot for that terminal, discarding terminal transmit time slots where transmit and receive time slots overlap in the same terminal.

An example of a method of communication in a TDD satellite communication system comprising at least one satellite and a plurality of terrestrial terminals will now be described with reference to the accompanying drawings in which:-
Figure 1 illustrates ideal timing for a basic TDD system;
Figure 2 illustrates worst case timing for a basic TDD system;
Figure 3 illustrates distributed timing for a basic TDD system;
Figure 4 illustrates ideal timing for a TDD/TDMA method according to the present invention;
Figure 5 illustrates worst case timing for a TDD/TDMA method according to the present invention;
Figure 6 illustrates worst case timing for an offset TDD method applied to the TDD/TDMA method according to the present invention;
Figure 7 illustrates the best case using a reversed TDD/TDMA according to the present invention;
Figure 8 illustrates the worst case for a reversed TDD/TDMA according to the present invention;
Figure 9 illustrates the occurrence of interfering terminals and the distance between them for a non optimised interference relationship for the maximum coverage of the satellite;
Figure 10 illustrates the occurrence of interfering terminals and the distance between them for an optimised interference relationship for the maximum coverage of the satellite;
Figure 11 illustrates the occurrence of interfering terminals and the distance between them for a non optimised interference relationship for a spot beam of 60km radius from the satellite;
Figure 12 illustrates the occurrence of interfering terminals and the distance between them for an optimised interference relationship for a spot beam of 60km radius from the satellite;
Figure 13 illustrates the cumulative distribution of minimum distance in km having run a simulation for the Fig. 11 and Fig. 12 examples for a series of different random terminal positions.
Figure 14 shows satellite distance geometries for inter-satellite interference.

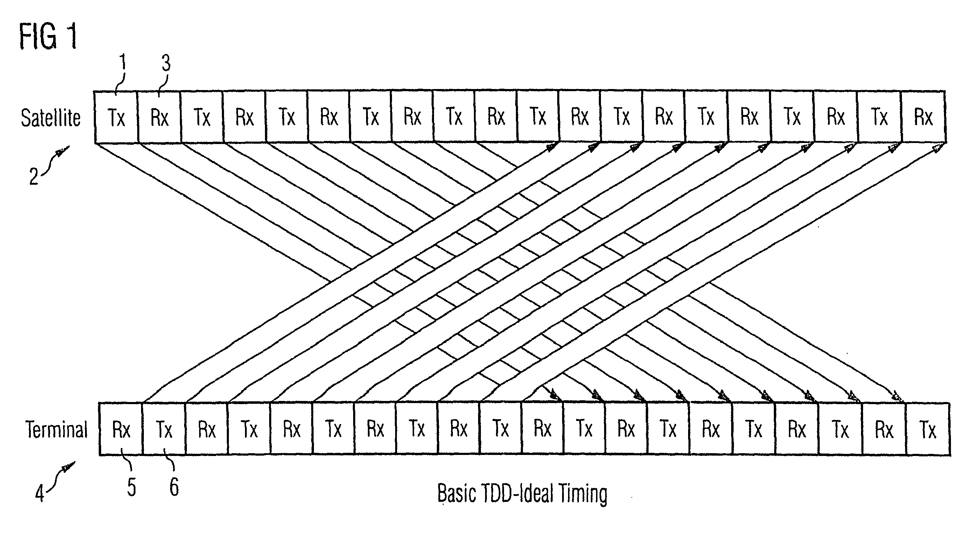

In a simple TDD scheme, the satellite round trip propagation delay is large, so it is highly desirable that any physical layer related delays do not add to this significantly. For this reason the TDD frame length is chosen to be a fraction of the propagation delay. An example in which the one way propagation delay is exactly five times the frame length is illustrated in Fig.1. Transmit time slots 1 from the satellite 2 are interleaved with reception time slots 3 to receive signals from terrestrial terminals 4 with respective receive and transmit time slots 5, 6. In this case the situation is ideal as every satellite transmission coincides exactly with a terminal receive time slot and vice versa.

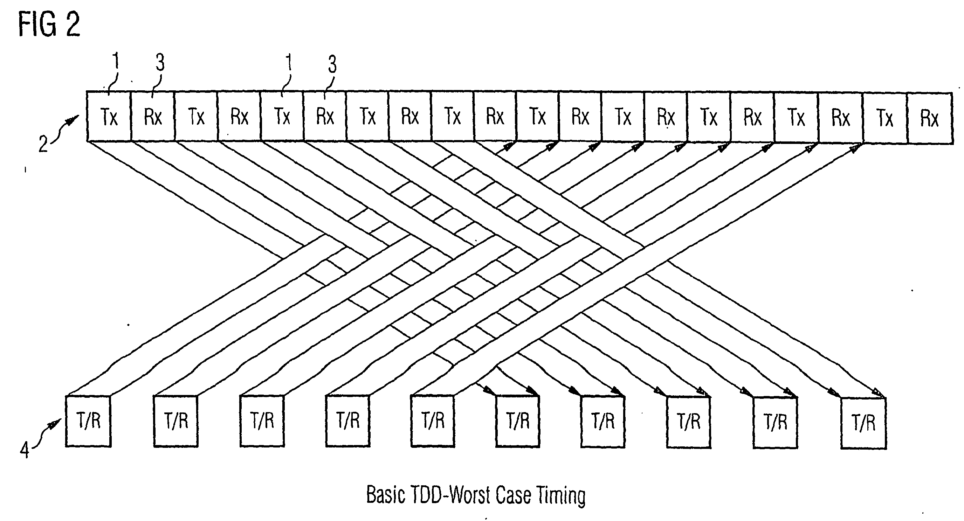

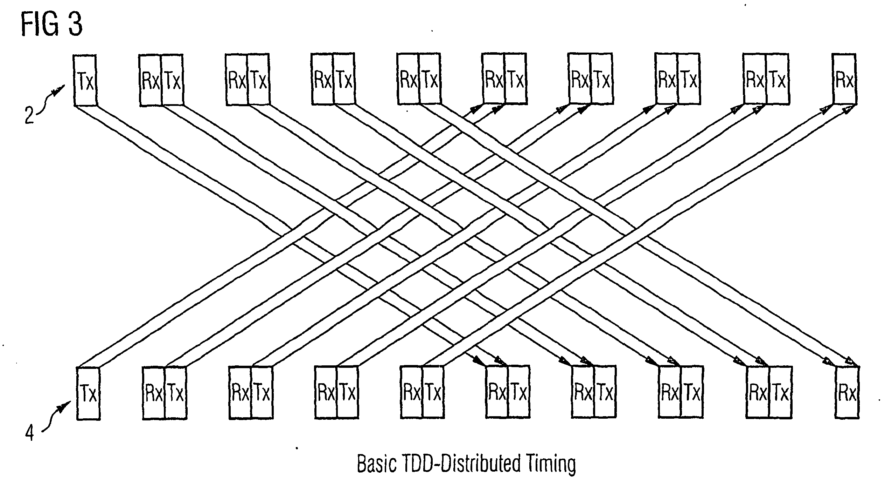

However, the propagation delay is not always an exact number of multiples of the frame length. Fig.2. illustrates a case in which the one way propagation delay is 4.75 times the frame length. In this case, the timing established by the satellite 2 forces the terminals 4 to receive and transmit at the same time. This is only possible if two separate frequencies are used which is undesirable, as half of the time is wasted altogether and the other time is unusable. This problem can be alleviated by sharing the timing shifts between the satellite 2 and the terminal 4, as shown in Fig. 3 so that at least some of the time is usable. However, this leaves the capacity effectively reduced to 50%.

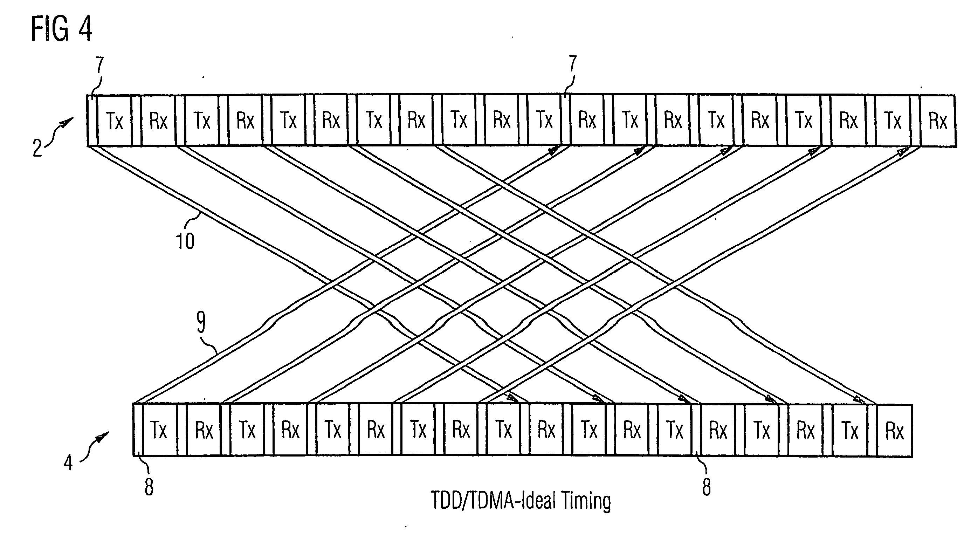

By introducing TDMA, the situation is improved considerably. The case for ideal timing with four slot TDMA is shown in Fig.4. Here the first slot 7, 8 in the satellite and terminal respectively is used for both uplink and downlink 9, 10. The situation is not dissimilar to that shown in Fig. 1, except that the transmission and reception times are shorter.

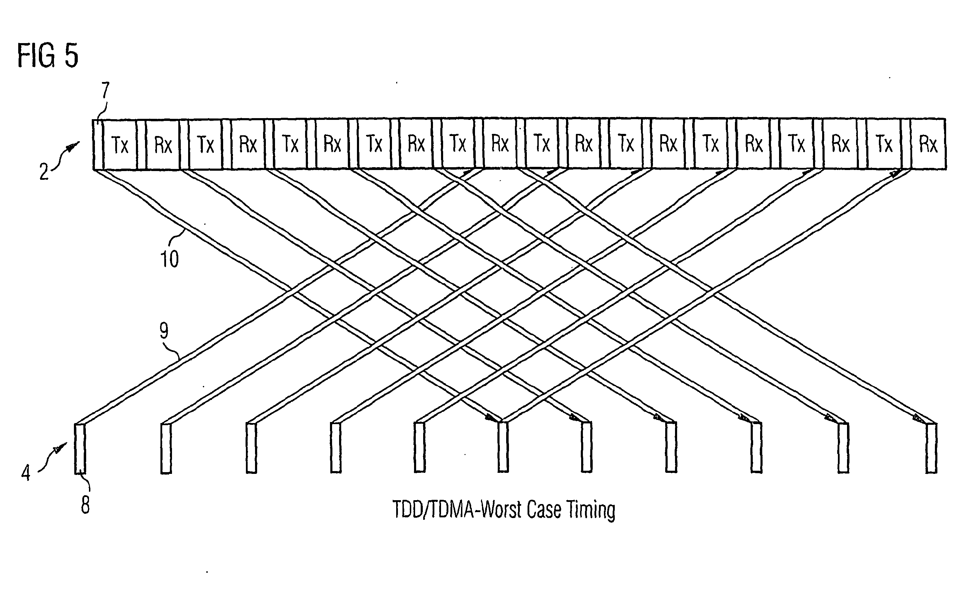

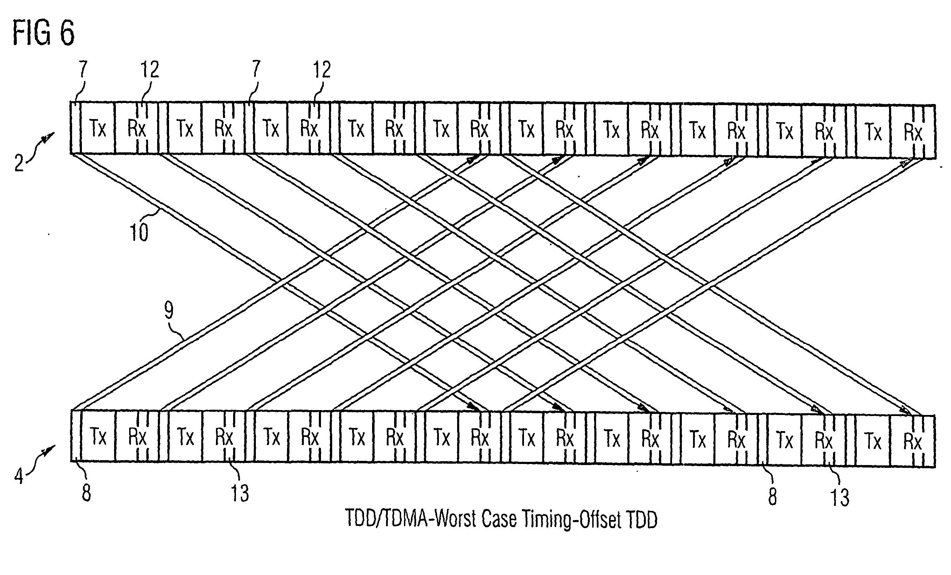

Fig. 5 illustrates the situation with TDMA where the one way propagation delay is 4.75 times the frame length. Here it can be seen, in the same way as for Fig.2, that the terminal needs to transmit and receive 11 at the same time. However, with TDMA there is additional flexibility to change the timing to avoid such conflicts. This is illustrated in Fig. 6 where the first slot 7, 8 is used for transmission and the third slot 12, 13 for reception. However, this approach, whilst solving the problem is relatively inflexible.

A more flexible solution to the problem of avoiding both transmit and receive being required together is to alter the switching of the TDD and TDMA by setting the innermost switching to be TDD switching and the outermost to be TDMA switching. In this case the structure is essentially the same as in Fig. 1 except that the source and destinations from successive time slots are different. For simplicity, the examples given show four time slots for TDMA, but in practice there are more likely to be between 10 and 100 slots.

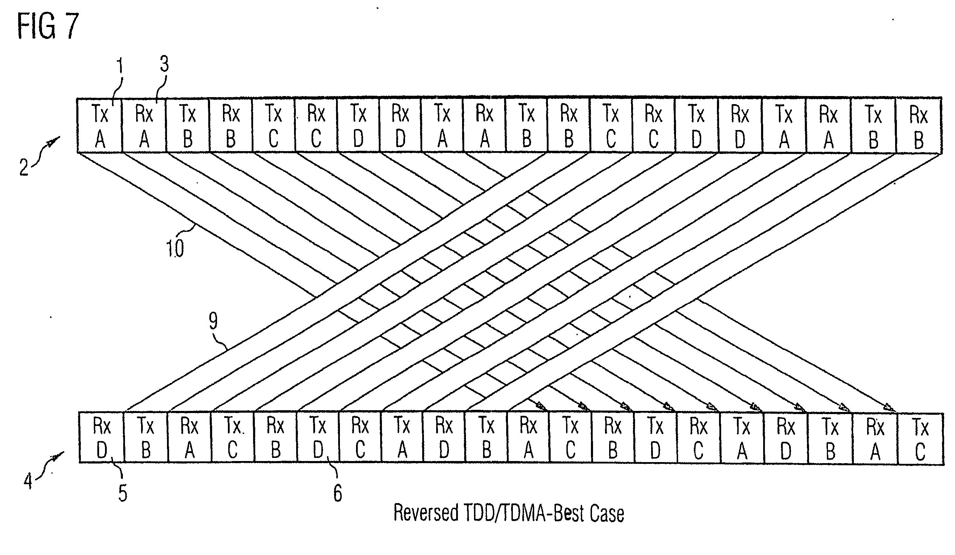

In Fig.7 the example shows a series of channels, labelled A, B, C & D, in both the satellite and the terminal. The downlink 10 time slot is followed by an uplink ti me slot 9 at the satellite for each successive channel A, B, C, D. For simplicity, the terminals 4 are assumed to be all at the same range to the satellite 2. Nevertheless, because of the large propagation delay, the uplink and downlink slots 5, 6 have become scrambled, but this is of no consequence.

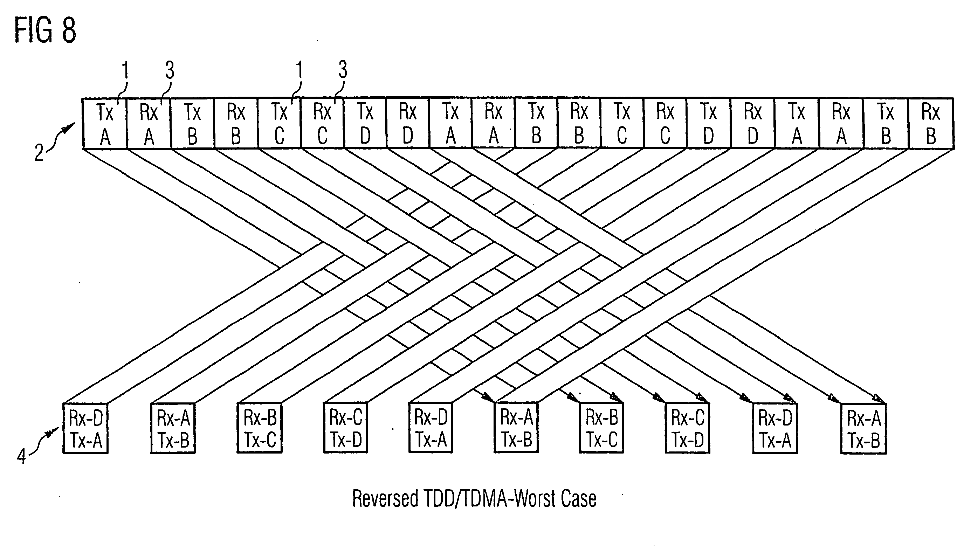

In the case where the propagation delay is the worst case, there is a similar situation to Fig. 2, but with an important difference, as illustrated in Fig. 8. Here, as before, transmission and reception is required on the earth at the same time. However, these requirements are not at the same place. Thus, for example, terminal D must receive while terminal A is transmitting, or terminal A receives whilst terminal B is transmitting. If the range between these two terminals is large enough then the interference path will be negligible, so this is feasible. Moreover, the order of the uplink time slots can be scrambled so as to maximise the distance between mutually interfering terminals.

In practice, the terminals are spread over an area large enough such that the propagation delays to the satellite vary considerably, i.e. by many time slots. Far from being a problem, this effectively randomises the interference and availability of uplink time slots that do not overlap with the corresponding downlink time slot. The system then operates as follows. All timing is synchronous at the satellite, but the timings on the ground depend on the propagation delays. Thus, terrestrial terminals are set to receive when their time slot reaches their location, but they must transmit at a ti me necessary to ensure that their signal is received into the allocated uplink time slot at the satellite.

Switching between uplink and downlink happens following transmission or reception for individual users, so instead of transmitting all users' downlinks followed by all users' uplinks, the uplink and downlink time slots 1, 3 are interleaved. The slot time is very short, of the order of 100 µs, compared with the round trip propagation delay. The up and downlink time slots are assigned independently to avoid terminals being required to receive and transmit at the same time and to maximise the range between interfering terminals on the ground. Thus, timing is synchronous at the satellite but appears arbitrary on the ground.

A simulation has been written to evaluate the potential for minimising interference and the available capacity. The results indicate that 100% capacity (i.e. no wasted time slots) is achievable with low interference on the ground. A method for providing control channels has also been determined. This takes up two channels. Thus for a system based on 100 channels the overhead is only 2%. With 100 µs time slots the TDMA frame length would be 20 ms for 100 channels. Thus the marginal impact on service delay (given 240 ms round trip satellite delay) is negligible. Interference between satellites is acceptable for three satellite global coverage. It is possible to use favourable synchronisation to avoid interference between adjacent satellites at shorter range. It is assumed that satellite navigation is used to provide the locations of the terminals. This is used to assist in the setting of timing advance (e.g. for using the random access channel). The locations are also relayed to the satellite so that it can use them to assist in setting up non interfering slot allocations.

The simulation of performance of the system was carried out using the following assumptions. A geostationary satellite was positioned above a point over the equator. A coverage area with circular perimeter was identified directly underneath the satellite. Initially this area was the maximum that gave satellite visibility (satellite elevation 0° at perimeter). A fixed number of terminals were deployed randomly with uniform distribution over the ground. The great circle distances between all terminal pairs were computed. Downlink time slots were assigned arbitrarily to each terminal and uplink time slots were assigned, initially in the same order as the downlink time slots, but with provision for some slots to be shifted if they require a terminal to have overlapped receive and transmit times.

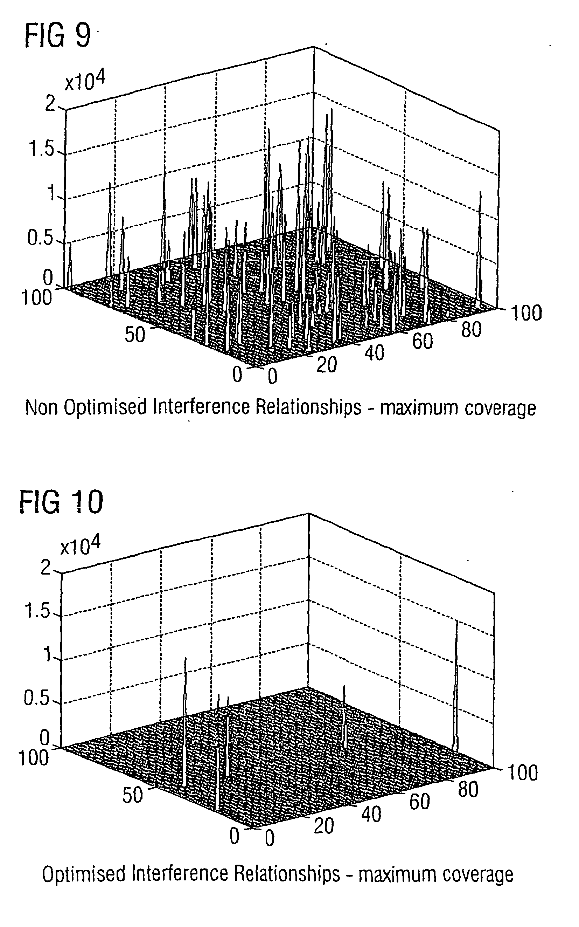

The distances between terminals were used to determine any cases where one terminal's transmission, delayed by the propagation time, overlapped with another terminal's reception time. For those cases, the distances between terminals were noted. A simulation was run for 100 terminals, with a slot length of 100 µs. Fig. 9 is a surface plot giving an indication of the result. The X and Y co-ordinates identify a pair of terminals. If the Z value is zero at a particular position then there is no interference between the terminals. Otherwise, the height indicates the distance between the interfering terminals. For the example shown, the worst case or minimum distance between interferers was 926 km. This is more than adequate for acceptable interference. However, this can be further improved upon.

In the example shown in Fig.9, the uplink time slots were allocated without reference to ground-to-ground interference effects. A more sophisticated assignment allocation has also been developed. This is based on the assumption that the satellite knows the positions of the terminals. This is not unreasonable if the terminals have GPS receivers and can relay their position information to the satellite on some control channel. The positions are only needed to a coarse degree so even with relatively high mobility this information would only need to be transferred infrequently. The principles of the optimising algorithm are as follows. First the downlink slots are assigned, which is assumed to be done on an arbitrary basis. Then, the effects for a particular terminal of assigning a time slot are examined in terms of the potential for that terminal interfering with other terminals' downlinks. The worst case interference that results is computed, i.e. the minimum distance between the transmitting terminal and the interfered terminal. This complete process is repeated for all possible time slots and for all terminals.

For every terminal, the worst case interference that will result if that terminal must use its worst time slot is determined and the terminals are ranked in order from the terminal that would have the worst interference if using its worst time slot, to the terminal that would have the least bad interference if using its worst time slot. Then, starting with the worst terminal, each terminal is assigned the best available time slot. In deciding on available time slots, any time slot resulting in the terminal having overlapped receive and transmit times is ignored.

An algorithm defining the optimising algorithm comprising the steps set out above was applied to the example of Fig. 9 (actual terminal positions) and the interference relationships derived, as shown in Fig. 10. This clearly shows that there are far fewer interferers. The minimum range to an interferer is now 4,670 km. This represents an improvement by a factor of over 5:1.

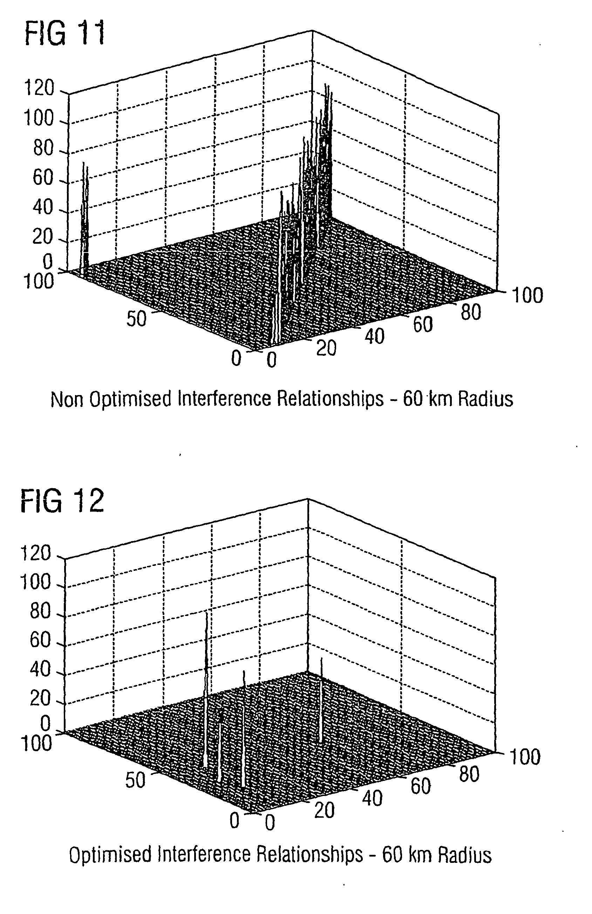

Given the ranges available without optimisation this improvement may seem academic. However, one of the advantages of using TDD is to facilitate greater use of phased array antennas and so allow spot beams. All time slots fall within a spot beam coverage area and this area is far smaller than the entire footprint of the geostationary satellite. For example, with a footprint of about 60 km, Fig. 11 shows the results for a typical scenario. The minimum distance between interferers is 6.5 km and occasionally much lower distances can arise. Fig. 12 illustrates the effects of applying optimisation. The minimum distance is now 57.5 km, which is a significant fraction of the diameter of the cell.

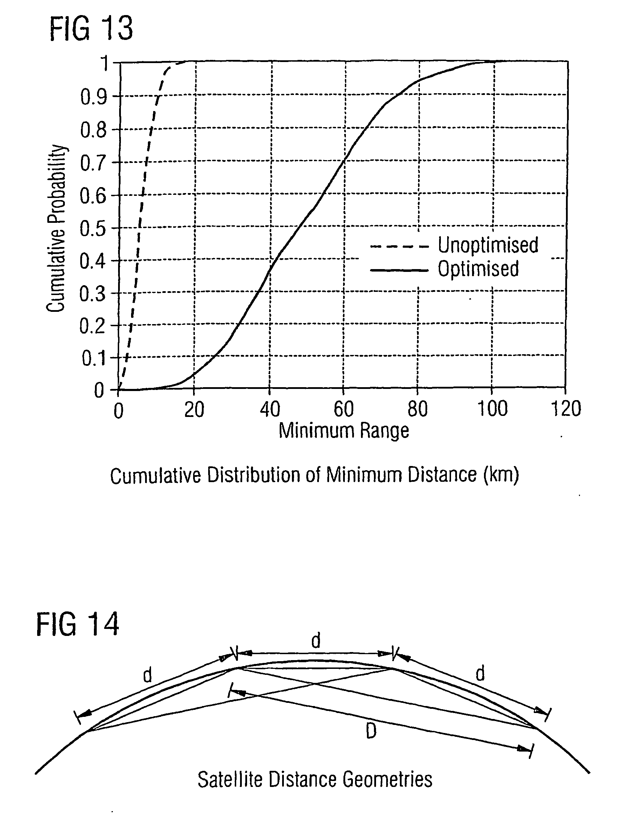

To obtain more statistically significant results the simulation was run 1,000 times with different random positions for the terminals. The cumulative distributions of minimum range in km, both with and without the optimisation, were then plotted in Fig. 13. The optimised case is significantly better than the un-optimised case. There are a small number of cases where the range may be unacceptable. Further improvement of the algorithm is expected to deal with these cases. It should also be noted that the cell size is very small, so this represents a worse than worst case situation. A single satellite would need over 15,000 spot beams this size to cover 1/3 of the earth and even allowing for covering land masses only, this still represents a huge number.

One potential problem with TDD is that not only can terminals interfere with terminals, but satellites with satellites. For the case of 3 geostationary satellites covering the earth this is not a problem because the mutual ranges, are greater than the satellite to ground ranges. Specifically, simple geometric considerations show that the worst case (i.e. for terminals on the edge of the coverage region) range ratio is about 1.85:1 corresponding to 5.4 dB in free space. Given the additional effects due to antenna patterns, inter satellite interference will not be a problem.

The above conclusion is satisfactory but unfortunate in that it appears to limit operation to cases where there are few satellites. In fact it is possible to bring the satellites closer together by ensuring that the propagation delays between adjacent satellites are whole multiples of the TDD period (i.e. twice the slot period - 200 µs in our example corresponding to multiples of about 6 km). If this is achieved then transmissions from one satellite will arrive and completely overlap with transmission slots for its neighbouring satellite. For non neighbouring satellites this relationship will gradually break down with increasing neighbour distance because the geometry of a circle will gradually take over, until *D* ≠ 2*d*. as illustrated in Fig. 14. However, if satellites are deployed at relatively short mutual distances then their coverage areas will be reduced on the ground so that their antennas will point more directly downwards leading to greater discrimination between the satellite to ground directions and the satellite to satellite directions.

For operation of a satellite based mobile communication system, it will clearly be necessary to set up calls. This requires a broadcast channel (BCH) and a random access channel (RACK). These can be provided by allocating a downlink time slot to the BCH and the immediately preceding uplink time slot to the RACH channel. Data is repeated on the broadcast channel so it is not essential for every terminal to receive every BCH time slot. However, a terminal could be assigned an uplink time slot that requires it to transmit during the reception period of the BCH time slot. For this reason it is proposed to allocate *two* BCH time slots separated by ½ of a TDMA repeat period. Then every terminal will be able to receive one or other BCH time slot.

## Claims

1. A method of communication in a satellite communication system comprising at least one satellite (2) and a plurality of terrestrial terminals (4); the method comprising allocating time division multiple access (TDMA) time slots for transmission between the satellite and any one of the plurality of terminals, such that for any given terminal, transmit time slots (7, 8) for transmission to the satellite and receive time slots (12, 13) for reception from the satellite are separated in time; and wherein propagation delay is not an exact number of multiples of frame length; **characterised in that** the system is a time division duplex (TDD) satellite communication system **in that** an assigned time delay between transmit and receive time slots at the any one terminal is small compared with round trip propagation delay; and **in that**, when the transmit time slot for one terminal causes a transmission from that one terminal to be received at another terminal which transmission is overlapped in time with a receive time slot allocated for the other terminal, then those two terminals are spaced apart in distance, such that interference between the two terminals is negligible.

2. A method according to claim 1, wherein signals between the terminals (4) and the satellite (2) are synchronised at the satellite.

3. A method according to claim 2, wherein the terminals (4) use navigational information to estimate their propagation delay to the satellite (2); and thus to determine the time required to transmit into an allocated time slot.

4. A method according to claim 3, wherein the satellite (2) transmits ephemeris data to the terminals (4) to aid in determining the propagation delay.

5. A method according to any preceding claim, wherein alternate time slots (1, 3) at the satellite (2) are used for transmission and reception.

6. A method according to any preceding claim, wherein the position of each terminal (4) is determined by the satellite (2), using location data provided by each terminal.

7. A method according to any preceding claim, wherein downlink timeslots are allocated to terminals at random.

8. A method according to any preceding claim, wherein uplink timeslots are allocated in order to avoid a transmission at one terminal being received by another terminal at a time for which the other terminal has been allocated a receive time slot.

9. A method according to claim 1, wherein terminal receive time slots are allocated randomly; wherein allocation of terminal transmit time slots includes the steps of: calculating the minimum distance between a transmitting terminal and a receiving terminal which receives the transmission; repeating this calculation for all terminal transmit time slots; repeating the calculation for all terminals; calculating the resulting interference if each terminal used its worst terminal transmit time slot; ranking the terminals according to which cause the worst interference with another terminal; and starting from the worst terminal, allocating the best time slot for that terminal, discarding terminal transmit time slots where transmit and receive time slots overlap in the same terminal.

## Patentansprüche

1. Kommunikationsverfahren in einem Satellitenkommunikationssystem, das wenigstens einen Satelliten (2) und eine Vielzahl von terrestrischen Endgeräten (4) umfasst; wobei das Verfahren umfasst: Zuweisen von Zeitmultiplex-Vielfachzugriff- (Time Division Multiple Access, TDMA-) Zeitschlitzen für die Übertragung zwischen dem Satelliten und einem beliebigen aus der Vielzahl von Endgeräten, derart, dass für ein beliebiges gegebenes Endgerät Sende-Zeitschlitze (7, 8) für das Senden zu dem Satelliten und Empfangs-Zeitschlitze (12, 13) für den Empfang von dem Satelliten zeitlich getrennt sind; und wobei die Laufzeit nicht eine exakte Anzahl von Vielfachen der Rahmenlänge ist; **dadurch gekennzeichnet, dass** das System ein Satellitenkommunikationssystem mit Zeitduplex (Time Division Duplex, TDD) ist; **dadurch**, dass eine zugewiesene Zeitverzögerung zwischen Sende- und Empfangs-Zeitschlitzen an dem beliebigen einen Endgerät klein ist, verglichen mit der Umlaufzeit; und **dadurch**, dass dann, wenn der Sende-Zeitschlitz für ein Endgerät eine Übertragung von diesem einen Endgerät, die an einem anderen Endgerät zu empfangen ist, verursacht, welche zeitlich mit einem Empfangs-Zeitschlitz überlappt ist, der für das andere Endgerät zugewiesen ist, diese zwei Endgeräte räumlich voneinander entfernt sind, so dass die Interferenz zwischen den zwei Endgeräten vernachlässigbar ist.

2. Verfahren nach Anspruch 1, wobei Signale zwischen den Endgeräten (4) und dem Satelliten (2) an dem Satelliten synchronisiert werden.

3. Verfahren nach Anspruch 2, wobei die Endgeräte (4) Navigationsinformationen verwenden, um ihre Laufzeit zu dem Satelliten (2) zu schätzen; und folglich, um die Zeit zu bestimmen, die benötigt wird, um in einen zugewiesenen Zeitschlitz zu senden.

4. Verfahren nach Anspruch 3, wobei der Satellit (2) Ephemeris-Daten an die Endgeräte (4) sendet, um sie beim Bestimmen der Laufzeit zu unterstützen.

5. Verfahren nach einem der vorhergehenden Ansprüche, wobei abwechselnde Zeitschlitze (1, 3) an dem Satelliten (2) zum Senden und zum Empfang verwendet werden.

6. Verfahren nach einem der vorhergehenden Ansprüche, wobei die Position jedes Endgerätes (4) von dem Satelliten (2) unter Verwendung von Standortdaten bestimmt wird, die von dem jeweiligen Endgerät zur Verfügung gestellt werden.

7. Verfahren nach einem der vorhergehenden Ansprüche, wobei Abwärts-Zeitschlitze den Endgeräten zufällig zugewiesen werden.

8. Verfahren nach einem der vorhergehenden Ansprüche, wobei Aufwärts-Zeitschlitze geordnet zugewiesen werden, um zu vermeiden, dass eine Übertragung an einem Endgerät von einem anderen Endgerät zu einer Zeit empfangen wird, für welche dem anderen Endgerät ein Empfangs-Zeitschlitz zugewiesen worden ist.

9. Verfahren nach Anspruch 1, wobei Empfangs-Zeitschlitze der Endgeräte zufällig zugewiesen werden; wobei die Zuweisung von Sende-Zeitschlitzen von Endgeräten die folgenden Schritte beinhaltet: Berechnen der minimalen Entfernung zwischen einem sendenden Endgerät und einem empfangenden Endgerät, welches die Sendung empfängt; Wiederholen dieser Berechnung für alle Sende-Zeitschlitze des Endgerätes; Wiederholen der Berechnung für alle Endgeräte; Berechnen der resultierenden Interferenz, wenn jedes Endgerät seinen ungünstigsten Sende-Zeitschlitz des Endgerätes verwenden würde; Ordnen der Endgeräte in einer Rangfolge danach, welche die stärkste Interferenz mit einem anderen Endgerät verursachen; und, beginnend bei dem ungünstigsten Endgerät, Zuweisen des besten Zeitschlitzes für dieses Endgerät, Verwerfen von Sende-Zeitschlitzen von Endgeräten, wo Sende- und Empfangs-Zeitschlitze sich bei demselben Endgerät überlappen.

## Revendications

1. Procédé de télécommunication dans un système de télécommunication par satellite comprenant au moins un satellite (2) et une pluralité de terminaux terrestres (4), le procédé consistant à attribuer des tranches de temps d'accès multiple par répartition dans le temps (AMRT) pour les émissions entre le satellite et l'un quelconque de la pluralité de terminaux, de telle sorte que, pour un quelconque terminal donné, les tranches de temps d'émission (7, 8) pour émettre à destination du satellite et les tranches de temps de réception (12, 13) pour recevoir du satellite sont séparées dans le temps, et en sachant que le temps de propagation n'est pas un nombre exact de multiples de la longueur de trame, **caractérisé en ce que** le système est un système de télécommunication par satellite à duplex par répartition dans le temps (TDD), **en ce qu'**un retard temporel attribué entre des tranches de temps d'émission et de réception au niveau du quelconque terminal est petit comparé au temps de propagation aller-retour, et **en ce que**, lorsque la tranche de temps d'émission d'un terminal fait qu'une émission de ce terminal est reçue sur un autre terminal, laquelle émission chevauche dans le temps une tranche de temps de réception attribuée à l'autre terminal, ces deux terminaux sont espacés d'une certaine distance de telle sorte que le brouillage entre les deux terminaux est négligeable.

2. Procédé selon la revendication 1, dans lequel des signaux entre les terminaux (4) et le satellite (2) sont synchronisés au niveau du satellite.

3. Procédé selon la revendication 2, dans lequel les terminaux (4) utilisent des informations de navigation pour estimer leur temps de propagation à destination du satellite (2) et donc, pour déterminer le temps requis pour émettre dans une tranche de temps attribuée.

4. Procédé selon la revendication 3, dans lequel le satellite (2) transmet aux terminaux (4) des données sur les éphémérides pour aider à déterminer le temps de propagation.

5. Procédé selon l'une quelconque des revendications précédentes, dans lequel des tranches de temps alternées (1, 3) au niveau du satellite (2) sont utilisées pour émettre et recevoir.

6. Procédé selon l'une quelconque des revendications précédentes, dans lequel la position de chaque terminal (4) est déterminée par le satellite (2) au moyen de données de localisation fournies par chaque terminal.

7. Procédé selon l'une quelconque des revendications précédentes, dans lequel les tranches de temps sur liaison descendante sont attribuées aux terminaux de manière aléatoire.

8. Procédé selon l'une quelconque des revendications précédentes, dans lequel les tranches de temps sur liaison montante sont attribuées de façon à éviter qu'une émission au niveau d'un terminal soit reçue par un autre terminal à un moment pour lequel l'autre terminal s'est vu attribuer une tranche de temps de réception.

9. Procédé selon la revendication 1, dans lequel les tranches de temps de réception des terminaux sont attribuées de manière aléatoire, en sachant que l'attribution des tranches de temps d'émission des terminaux comprend les étapes consistant : à calculer la distance minimale entre un terminal d'émission et un terminal de réception qui reçoit l'émission ; à répéter ce calcul pour toutes les tranches de temps d'émission de terminaux ; à répéter le calcul pour tous les terminaux ; à calculer le brouillage résultant si chaque terminal utilisait sa pire tranche de temps d'émission de terminal ; à classer les terminaux en fonction de celui qui entraîne le pire brouillage avec un autre terminal, et en partant du pire terminal, à attribuer la meilleure tranche de temps pour ce terminal en rejetant les tranches de temps d'émission de terminal pour lesquelles les tranches de temps d'émission et de réception se chevauchent dans le même terminal.
